# EUROPÄISCHE PATENTSCHRIFT

(11) **EP 3 314 156 B1**
(45) Veröffentlichungstag und Bekanntmachung des Hinweises auf die Patenterteilung: **10.06.2020**
(21) Anmeldenummer: 16716216.3
(22) Anmeldetag: 14.04.2016
(51) Int. Cl.: F16L 37/00, F16L 37/091, F16L 37/092, F16L 41/14

(54) **ÜBERWURFSCHRAUBE UND ANSCHLUSSVORRICHTUNG ZUM LÖSBAREN ANSCHLUSS VON KUNSTSTOFF-ROHRLEITUNGEN**
RETAINING SCREW AND CONNECTING DEVICE FOR THE RELEASABLE CONNECTION OF PLASTICS PIPES
VIS DE FIXATION ET DISPOSITIF DE RACCORDEMENT POUR LE RACCORDEMENT AMOVIBLE DE CONDUITS TUBULAIRES EN MATIÈRE SYNTHÉTIQUE

(30) Priorität: 24.06.2015 DE 102015110124
(43) Veröffentlichungstag der Anmeldung: 02.05.2018
(73) Patentinhaber: Voss Automotive GmbH, 51688 Wipperfürth (DE)
(72) Erfinder: FRANGENBERG, Markus, 51789 Lindlar (DE); RÖHRIG, Lukas, 51709 Marienheide (DE)
(74) Vertreter: Patent- und Rechtsanwälte Dr. Solf & Zapf
(86) Internationale Anmeldenummer: PCT/EP2016/058176
(87) Internationale Veröffentlichungsnummer: WO 2016/206824

(56) Entgegenhaltungen:
- EP-A1- 0 631 081
- DE-U1- 8 536 760
- GB-A- 2 120 340
- US-A- 3 016 248

## Beschreibung

Die vorliegende Erfindung betrifft eine Überwurfschraube bzw. eine Anschlussvorrichtung zum lösbaren Anschluss von Kunststoff-Rohrleitungen, umfassend eine Überwurfschraube mit einem Schraubenschaft, an dessen in Einschraubrichtung vorderen Bereich ein Außengewindeabschnitt ausgebildet ist und hieran sich entgegen der Einschraubrichtung ein Dichtungsabschnitt mit einer Umfangsdichtung anschließt, und wobei eine innere Durchgangsöffnung vorhanden ist, die einen in Einschraubrichtung gesehen vorderen Führungsabschnitt aufweist sowie einen in Einschraubrichtung hinter diesen sich anschließenden Dichtabschnitt, und mit einem in Einschraubrichtung am vorderen Ende der Durchgangsöffnung angeordneten Halteelement für die anzuschließende Rohrleitung.

Eine Anschlussvorrichtung der vorgenannten Art ist aus der EP 0 631 081 A1 bekannt. Bei dieser Anschlussvorrichtung wird die Überwurfschraube mit ihrem Außengewindeabschnitt in einen Innengewindeabschnitt einer Formbohrung eines Anschlusskörpers eingeschraubt, wobei die Überwurfschraube jeweils an den Innendurchmesser der vorhandenen Formbohrung angepasst sein muss. Dies ist nachteilig, da somit jeweils eine Spezialanfertigung erforderlich ist. Bei einer derartigen Abdichtung ist die Überwurfschraube nicht für unterschiedliche Bohrungsausführungen geeignet.

GB 2 120 340 A, US 3,016,248 und DE 85 36 760 U1 offenbaren ebenfalls Anschlussvorrichtungen mit Überwurfschrauben.

Der vorliegenden Erfindung liegt die Aufgabe zu Grunde, ausgehend von einer Überwurfschraube bzw. Anschlussvorrichtung der gattungsgemäßen Art, die Notwendigkeit von Spezialanfertigungen zu verringern und eine geeignete Abdichtung für verschiedene Einbaugegebenheiten bereit zu stellen und damit die Flexibilität zu erhöhen und ebenfalls die Dichtigkeit der Anschlussvorrichtung zu verbessern.

Erfindungsgemäß wird dies durch die Merkmalskombination des Anspruchs 1 bzw. 10 erreicht. Die Erfindung basiert auf der Erkenntnis, dass eine Dichtfunktion, unabhängig von der Art der Befestigung der Überwurfschraube am Aggregat, erreicht werden kann, und dass die Anordnung der Elemente des Dichtungsabschnittes für weitere Funktionen der Überwurfschraube genutzt werden kann. Zudem wird die Dichtigkeit dauerhaft verbessert. Aufgrund der Erfindung wird die umfangsgemäße Abdichtung in die Formbohrung eines Anschlusskörpers verlegt, und der Außengewindeabschnitt der Überwurfschraube, der einen geringeren Außendurchmesser aufweist als der Dichtungsabschnitt, beeinflusst nicht die Dichtfunktion, und die Dichtfunktion ist von der Haltefunktion unabhängig. Hierdurch wird die Variabilität der Verwendung der erfindungsgemäßen Anschlussvorrichtung erhöht, denn es ist ebenfalls möglich, eine erfindungsgemäße Überwurfschraube in einen Anschlusskörper einzusetzen, der keinen Innengewindeabschnitt aufweist. Zudem kann es erfindungsgemäß von Vorteil sein, wenn die Überwurfschraube mit ihrem Außengewindeabschnitt in einen Einpressadapter eingeschraubt ist, der in eine Formbohrung eingepresst wird, die ihrerseits einen den Dichtungsabschnitt der Überwurfschraube aufnehmenden Dichtabschnitt aufweist. Durch die Verwendung eines derartigen Einpressadapters kann eine erfindungsgemäße Überwurfschraube leicht für unterschiedliche Anschlussdurchmesser eingesetzt werden, und darüber hinaus ist eine Fixierung in beliebigen Formbohrungen möglich.

Erfindungsgemäß ist es vorteilhaft, wenn die Umfangsnut aus einem Nutgrund und einander gegenüberliegenden, im Nutgrund endenden Seitenwänden besteht, wobei die in Einschraubrichtung vordere Seitenwand eine geringere Wandhöhe besitzt als die gegenüberliegende, in Einschraubrichtung hintere Seitenwand, so dass der Dichtungsabschnitt zwei Abschnitte mit unterschiedlichen Außendurchmessern im Anschluss an die jeweiligen Seitenwände aufweist. Hierdurch wird erreicht, dass der in Einschraubrichtung vordere Abschnitt des Dichtungsabschnitts nicht den Anlagebereich der Umfangsdichtung beim Einschrauben, Einstecken oder Einpressen der Überwurfmutter beschädigen kann, wodurch die Dichtigkeit beeinträchtigt werden könnte. Gleichzeitig wird aber ebenfalls verhindert, dass die Umfangsdichtung aus der Ringnut bei Druckbeaufschlagung herauswandern kann. Um einen sicheren Halt des insbesondere als O-Ringdichtung ausgebildeten Dichtungselementes in der Ringnut zu gewährleisten, ist es zudem vorteilhaft, wenn die in Einschraubrichtung vordere Seitenwand eine Seitenwandhöhe besitzt, die mindestens 50 % eines Schnurdurchmessers, insbesondere mindestens 50 % des Schnurdurchmessers des verpressten Dichtring-Durchmessers des ringförmigen Dichtelementes beträgt. Diese Seitenwand dient als Anschlag für den Einpressadapter und als Schutz, dass die Dichtung beim Entnehmen der Überwurfschraube aus der Bohrung nicht in der Bohrung zurückbleibt.

Ebenfalls ist es von Vorteil, wenn in Einschraubrichtung hinter dem Dichtungsabschnitt sich ein Betätigungsabschnitt anschließt, dessen Hüllfläche einen Umfangskreis aufweist, dessen Durchmesser vorzugsweise kleiner ist als der Außendurchmesser des Dichtungsabschnitts. Hierdurch ergibt sich einerseits eine kompakte Bauform der erfindungsgemäßen Überwurfschraube, und andererseits behindert der Betätigungsabschnitt nicht die Befestigung einer erfindungsgemäßen Überwurfschraube mittels einer außen aufgesetzten Halteplatte, sofern die Überwurfschraube eingesteckt und nicht eingeschraubt wird.

Die innere Abdichtung der eingesteckten Rohrleitung in die Überwurfschraube erfolgt vorteilhafterweise dadurch, dass in dem Dichtabschnitt mindestens eine in einer inneren Ringnut angeordnete O-Ringdichtung vorhanden ist, wobei insbesondere zwei hintereinander angeordnete O-Ringdichtungen vorhanden sein können, wobei die eine O-Ringdichtung, und zwar die in Einsteckrichtung vordere als Fluiddichtung wirkt, und die in Einsteckrichtung hintere O-Ringdichtung das Eindringen von Schmutzpartikeln verhindern soll.

Weiterhin ist es erfindungsgemäß von Vorteil, wenn das Halteelement innerhalb eines am in Einschraubrichtung vorderen Ende des Schraubenschaftes rastend befestigten Fixierelementes gehalten wird. Hierdurch kann eine Vormontage des Halteelementes an der Überwurfschraube erfolgen. Erfindungsgemäß kann es von Vorteil sein, wenn das Halteelement als Zahnscheibe ausgebildet ist oder als Klemmring mit mindestens einer inneren Schneidkante. Ebenfalls kann es erfindungsgemäß von Vorteil sein, wenn die Zahnscheibe, die das Halteelement bildet, unmittelbar am vorderen Ende des Schraubenschaftes befestigt ist, so dass bei dieser Art von Befestigung ein gesondertes Fixierelement entfallen kann. Sofern erfindungsgemäß ein Einpressadapter verwendet wird, so weist dieser vorteilhafterweise an seinem Außenumfang eine Verzahnung auf, wobei ihre Haltezähne als Ringsegmente oder als umfangsgemäß beabstandete Einzelzähne ausgebildet sein können. Erfindungsgemäß ist es von Vorteil, wenn die Höhe der Haltezähne gleich ist oder in Einschraubrichtung abnimmt. Alternativ kann es ebenfalls möglich sein, wenn bei gleicher Höhe der Zahnsegmente diese auf unterschiedlich großen Kreisdurchmessern jeweils eines Umfangskreises des Einpressadapters angeordnet sind, so dass der Einpressadapter an seinem Umfang konisch ausgebildet sein kann. Von Vorteil ist es weiterhin, wenn der Einpressadapter an seinem in Einpressrichtung bzw. Einschraubrichtung vorderen Ende im Anschluss an seinen Innengewindeabschnitt einen Ringflansch aufweist, in dem das Fixierelement für die Zahnscheibe oder den Klemmring aufgenommen wird.

Bei der Verwendung eines Einpressadapters ist es insbesondere von Vorteil, wenn das Fixierelement zusätzlich als Tiefenanschlag für die einzusteckende Rohrleitung ausgebildet ist. Somit entfällt bei der Ausbildung der Formbohrung zur Aufnahme des Einpressadapters die Ausbildung eines Tiefenanschlags in der Formbohrung des Anschlusskörpers.

Vorteilhafte Ausführungen der Erfindung sind in den Unteransprüchen enthalten und insofern wird in vollem Umfange auf die Unteransprüche verwiesen, deren Merkmale unabhängig voneinander in Verbindung mit dem Gegenstand des Hauptanspruchs wesentlich für die Erfindung sind.

Anhand der in den beiliegenden Zeichnungen dargestellten Ausführungsbeispiele wird die Erfindung näher erläutert. Es zeigen:
- Fig. 1: einen Längsschnitt entlang der Längsachse X-X durch eine erfindungsgemäße Anschlussvorrichtung,
- Fig. 2: einen Längsschnitt gemäß Fig. 1 durch eine weitere Ausführungsform einer erfindungsgemäßen Anschlussvorrichtung,
- Fig. 3: einen Längsschnitt gemäß Fig. 1 durch eine weitere Ausführungsform einer erfindungsgemäßen Anschlussvorrichtung,
- Fig. 4: einen Längsschnitt gemäß Fig. 1 durch eine weitere Ausführungsform einer erfindungsgemäßen Anschlussvorrichtung,
- Fig. 5: einen Längsschnitt gemäß Fig. 1 durch eine weitere Ausführungsform einer erfindungsgemäßen Anschlussvorrichtung,
- Fig. 6: einen Längsschnitt gemäß Fig. 1 durch eine weitere Ausführungsform einer erfindungsgemäßen Anschlussvorrichtung,
- Fig. 7: eine perspektivische Ansicht einer erfindungsgemäßen Anschlussvorrichtung, bestehend aus Einpressadapter und Überwurfschraube, und
- Fig. 8: eine perspektivische Ansicht einer erfindungsgemäßen Anschlussvorrichtung gemäß Fig. 7 in veränderter Ausführung.

In den verschiedenen Figuren der Zeichnung sind gleiche Teile stets mit denselben Bezugszeichen versehen.

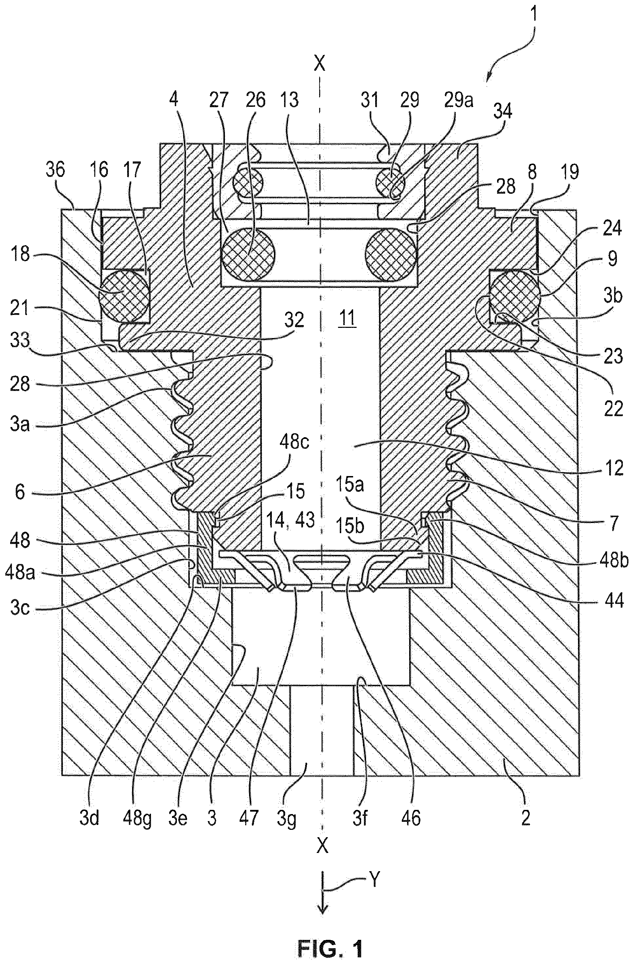

Wie sich zum Beispiel aus Fig. 1 ergibt, umfasst eine erfindungsgemäße Anschlussvorrichtung 1 zum lösbaren Anschluss einer nicht dargestellten Kunststoff-Rohrleitung eine Überwurfschraube 4 mit einem Schraubenschaft 6. An seinem in Einschraubrichtung Y vorderen Bereich weist der Schraubenschaft 6 einen Außengewindeabschnitt 7 auf. Der Außengewindeabschnitt 7 besitzt ein insbesondere metrisches Außengewinde. Hieran schließt sich entgegen der Einschraubrichtung Y ein Dichtungsabschnitt 8 an, der eine umfänglich verlaufende Dichtungsfläche 9 besitzt. Die Überwurfschraube 4 weist eine innere Durchgangsöffnung 11 auf, in die die anzuschließende Rohrleitung eingesteckt wird. Die Durchgangsöffnung 11 umfasst einen in Einschraubrichtung Y gesehen vorderen Führungsabschnitt 12 und einen in Einschraubrichtung Y hinter diesem sich anschließenden Dichtabschnitt 13. Weiterhin ist am in Einschraubrichtung Y vorderen Ende der Durchgangsöffnung 11 ein Halteelement 14 angeordnet, mit dem die anzuschließende und durch die Durchgangsöffnung 11 hindurch gesteckte Rohrleitung in ihrer Lage innerhalb der Anschlussvorrichtung 1 fixierbar ist. Der Dichtungsabschnitt 8 weist einen größeren Außendurchmesser auf als der Außengewindeabschnitt 7. In seiner Umfangsfläche 16 weist der Dichtungsabschnitt 8 in einer Umfangsnut 17 ein ringförmiges Dichtelement 18 auf. Vorzugsweise ist das Dichtelement 18 als ein O-Dichtring ausgebildet und besteht aus einem elastisch verformbaren Material. Die Umfangsnut 17 weist einen Nutgrund 22 und einander gegenüberliegende, im Nutgrund 22 endende Seitenwände 23, 24 auf. Die in Einschraubrichtung Y vordere Seitenwand 23 besitzt eine vorzugsweise geringere Wandhöhe als die gegenüberliegende, in Einschraubrichtung Y hintere Seitenwand 24, so dass der Dichtungsabschnitt 8 zwei Abschnitte mit unterschiedlichen Außendurchmessern im Anschluss an die jeweiligen Seitenwände 23, 24 aufweist. Der Abschnitt mit dem geringeren Außendurchmesser bildet einen vorderen Stirnbund 32. Der Abschnitt mit dem größeren Außendurchmesser bewirkt, dass das Dichtelement 18 eine große Anlagefläche zum Dichtungsabschnitt 8 aufweist, so dass eine Spaltextrusion des Dichtelementes 18 vermieden werden kann. Die Seitenwandhöhe der in Einschraubrichtung Y vorderen Seitenwand 23 beträgt bevorzugt mindestens 50 % des Schnurdurchmessers des ringförmigen Dichtelementes 18, insbesondere mindestens 50 % des Schnurdurchmessers des verpressten Dichtelementes 18.

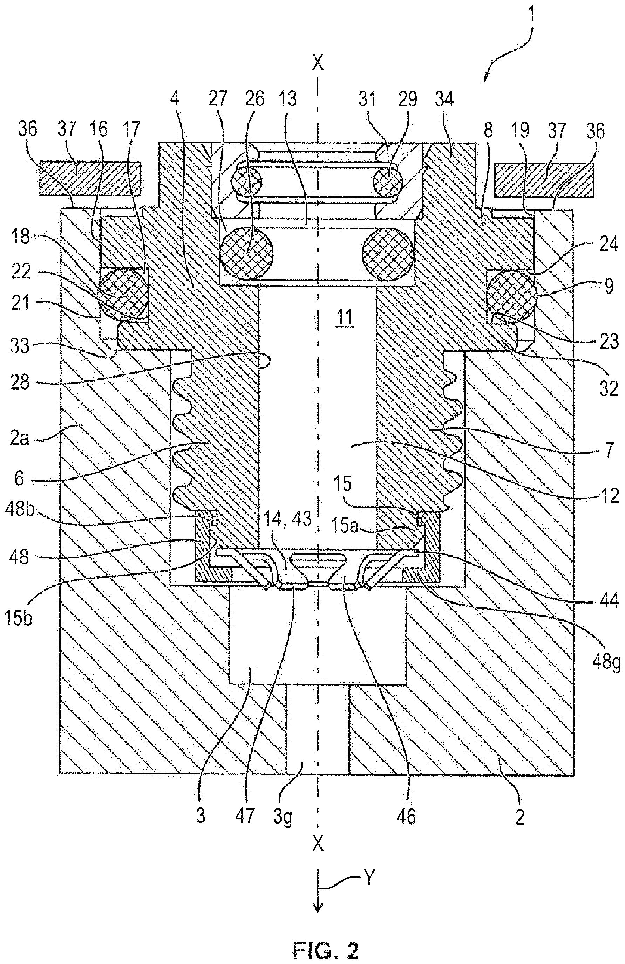

Der Dichtabschnitt 13 der Durchgangsöffnung 11 weist eine Dichtung 26 auf, die insbesondere als eine O-Ringdichtung ausgebildet ist, die in einer inneren Ringnut 27 in einer Innenwandung 28 des Dichtabschnitts 13 angeordnet ist. Diese Dichtung 26 verhindert den Austritt eines Fluids entlang der Kunststoff-Rohrleitung. Die Dichtung 26 kann auch direkt in einer eingestochenen Nut liegen oder eingebördelt sein, auch ist es möglich, dass der Ringnutkörper eingebördelt ist. Es ist von Vorteil, wenn der Dichtungsabschnitt 8, siehe beispielsweise Fig. 1, 2, in axialer Richtung hintereinander angeordnete Dichtungen 26, 29 aufweist. Die Dichtung 26 ist hierbei in Einschraubrichtung Y vor der Dichtung 29 angeordnet. Die in Einschraubrichtung Y hintere Dichtung 29 soll insbesondere das Eindringen von Schmutzpartikeln verhindern. Die Dichtung 29 ist in einer Ringnut 29a angeordnet und ist zum Beispiel als O-Ringdichtung ausgebildet. Die Dichtung 29 ist in einem Ringnutkörper 31 ausgebildet, welcher koaxial zur Durchgangsöffnung 11 mit der Überwurfschraube 4 verbunden und insbesondere innerhalb der Durchgangsöffnung 11 verschraubt oder eingepresst ist. Dieser Ringnutkörper 31 bildet somit die in Einschraubrichtung Y hintere Nutwandung der Ringnut 27. Hierdurch kann die innere Durchgangsöffnung 11 ohne einen Hinterschnitt hergestellt werden.

Wie in Fig. 1 dargestellt ist, umfasst eine erfindungsgemäße Anschlussvorrichtung 1 vorteilhafterweise auch einen Anschlusskörper 2 mit einer inneren Formbohrung 3. Diese innere Formbohrung 3 besitzt einen Innengewindeabschnitt 3a. Weiterhin weist die Formbohrung 3 einen sich entgegen der Einschraubrichtung Y erstreckenden, vorzugsweise zylindrischen Dichtabschnitt 3b auf. In den Innengewindeabschnitt 3a ist die Überwurfschraube 4 mit ihrem Schraubenschaft 6 und dessen Außengewindeabschnitt 7 einschraubbar. Der Innendurchmesser des Dichtabschnitts 3b ist größer als der Gewindeinnendurchmesser des Innengewindeabschnitts 3a. Durch diese Ausbildung ergibt sich zwischen dem Innengewindeabschnitt 3a und dem Dichtabschnitt 3b eine Auflagestufe 33. Der Innendurchmesser des Dichtabschnitts 3b ist größer als der Außendurchmesser des Dichtungsabschnitts 8 in seinem in Einschraubrichtung Y hinter dem Dichtelement 18 liegenden Bereich und kleiner als der Außendurchmesser des Dichtelementes 18.

Wie in Fig. 1 dargestellt ist, kann die Überwurfschraube 4 mit ihrem Außengewindeabschnitt 7 in den Innengewindeabschnitt 3a der Formbohrung 3 eingeschraubt werden. Hierbei bildet die Auflagestufe 33 einen Tiefenanschlag für den Dichtungsabschnitt 8, so dass bei der Anlage des Stirnbundes 32 an der Auflagestufe 33 der Einschraubvorgang beendet ist. Da der Außendurchmesser des Stirnbundes 32 geringer ist als der Außendurchmesser des in Einschraubrichtung Y hinter dem Dichtelement 18 liegenden Bereich des Dichtungabschnitts 8, kann dieser durch den Stirnbund 32 beim Einschrauben nicht beschädigt werden.

Weiterhin ist es von Vorteil, wenn sich in Einschraubrichtung Y hinter dem Dichtungsabschnitt 8 ein Betätigungsabschnitt 34 anschließt, dessen äußere Hüllfläche einen Umfangkreis aufweist, dessen Durchmesser vorzugsweise kleiner ist als der Außendurchmesser des Dichtungsabschnitts 8. Dieser Betätigungsabschnitt 34 ist mit einem Montagewerkzeug zum Aufbringen des erforderlichen Anzugs- oder Lösemomentes betätigbar und ist insbesondere als Außensechskant ausgebildet.

Wie beispielsweise in Fig. 1 und 2 dargestellt ist, wird das Halteelement 14 zweckmäßigerweise von einer Zahnscheibe 43 gebildet. Die Zahnscheibe 43 weist einen äußeren Ringkragen 44 auf, an dessen inneren Öffnungsrand radial und schräg in Einschraubrichtung Y verlaufende Haltezähne 46 angeformt sind, deren vordere Zahnkanten 47 auf einem Umfangskreis liegen, dessen Durchmesser kleiner/gleich dem Außendurchmesser der anzuschließenden Rohrleitung ist. Vorzugsweise sind die Haltezähne 46 der Zahnscheibe 43 derart ausgebildet, dass sie sich in die Wandung der Rohrleitung bei Zugbelastung der Rohrleitung entgegen der Einschraubrichtung Y eingraben, so dass die Rohrleitung innerhalb der Anschlussvorrichtung 1 gegen Herausziehen gesichert ist.

Es ist von Vorteil, wenn die Haltezähne 46 an ihren freien Enden eine kreisbogenförmige Zahnkante 47 aufweisen. Mittels dieses Merkmals werden Spannungsspitzen, insbesondere bei Zug der Rohrleitung entgegen der Einschraubrichtung Y, vermieden.

Wie weiterhin z. B. in Fig. 1 dargestellt ist, kann die Zahnscheibe 43 innerhalb eines am in Einschraubrichtung Y vorderen Ende des am Schraubenschaft 6 rastend befestigten Fixierelementes 48 derart gehalten werden, dass sie konzentrisch zur Durchgangsöffnung 11 angeordnet ist. Das Fixierelement 48 ist hülsenförmig ausgebildet und besteht aus einer Ringwand 48a, an deren in Einschraubrichtung Y hinteren Ende ein radial nach innen ragender Rastansatz 48b angeformt ist, der eine dem Schraubenschaft 6 zugekehrte Einführungsschräge 48c aufweist. Der Außendurchmesser der Ringwand 48a ist kleiner als der Gewindeinnendurchmesser des Außengewindeabschnitts 7, und ihr Innendurchmesser ist größer/gleich dem Außendurchmesser des Ringkragens 44 der Zahnscheibe 43. Mit dem Rastansatz 48b rastet das Fixierelement 48 in eine umfängliche Rastnut 15 des Schraubenschaftes 6 im Anschluss an den Außengewindeabschnitt 7. Hierzu weist der Schraubenschaft 6 einen im Außendurchmesser verkleinerten Fixierabschnitt 15a auf, der an seinem vorderen freien Ende eine Aufweitungsschräge 15b derart besitzt, dass beim Aufstecken des Fixierelementes 48 entgegen der Einschraubrichtung Y das Fixierelement 48 derart radial geweitet wird, und zwar durch das Zusammenwirken der Aufweitungsschräge 15b mit der Einführungsschräge 48c, dass der Rastansatz 48b in die Rastnut 15 einrasten kann. An dem dem Rastansatz 48b gegenüberliegenden Ende besitzt die Ringwandung 48a einen radial nach innen gerichteten Ringkragen 48g, dessen Innendurchmesser kleiner ist als der Außendurchmesser des Ringkragens 44 der Zahnscheibe 43. Die Zahnscheibe 43 wird aufgrund dieser Ausbildung zwischen dem Ringkragen 48g und dem gegenüberliegenden Ende des Fixierabschnitts 15a gehalten. Zur Aufnahme des Fixierelementes 48 weist die Formbohrung 3 des Anschlusskörpers 2 im Anschluss an den Innengewindeabschnitt 3a vorteilhafterweise einen zylindrischen Aufnahmeabschnitt 3c auf, dessen Innendurchmesser dem Gewindeinnendurchmesser des Innengewindeabschnitts 3a entspricht. Dieser Aufnahmeabschnitt 3c endet in einer radial nach innen gerichteten Stufenfläche 3d, und an diese schließt sich zweckmäßigerweise ein Bohrungsabschnitt 3e an, der einen Innendurchmesser besitzt, der größer/gleich dem Außendurchmesser der anzuschließenden Rohrleitung ist. Am axial innen liegenden Ende des Bohrungsabschnitts 3e ist eine ringförmige Anschlagfläche 3f vorhanden, die als Tiefenanschlag für die eingesteckte Rohrleitung dient. Der Innendurchmesser der ringförmigen Anschlagfläche 3f entspricht zweckmäßigerweise dem Innendurchmesser der anzuschließenden Rohrleitung. An diese Anschlagfläche 3f schließt sich ein weiterer Bohrungsabschnitt 3g an, dessen Innendurchmesser zweckmäßigerweise dem Innendurchmesser der anzuschließenden Rohrleitung angepasst ist.

Eine weitere Ausbildung der Erfindung, siehe Fig. 2, umfasst eine Anschlussvorrichtung 1 mit einem Anschlusskörper 2a, der sich von dem Anschlusskörper 2, wie in Fig. 1 dargestellt, dadurch unterscheidet, dass dieser Anschlusskörper 2a keinen Innengewindeabschnitt aufweist, sondern stattdessen einen glattwandigen zylinderförmigen Bohrungsabschnitt 3h. Im Übrigen stimmt der Anschlusskörper 2a in seiner Ausgestaltung mit dem Anschlusskörper 2 überein. Auch bei einem derartigen Anschlusskörper 2a kann die erfindungsgemäße Überwurfschraube 4 verwendet werden, indem sie mit ihrem Außengewindeabschnitt 7 in den Anschlusskörper 2a eingesteckt wird. Hierbei erfolgt die umfangsgemäße Abdichtung des Dichtungsabschnittes 8 entsprechend der Ausführungsform, wie sie in Fig. 1 beschrieben ist. Um die eingesteckte Überwurfschraube 4 innerhalb der gewindefreien Formbohrung zu fixieren, ist eine Halteplatte 37 vorgesehen, die eine Durchgangsöffnung 37a aufweist, und die von oben auf die eingesteckte Überwurfschraube 4 aufgelegt und befestigt wird. Hierbei ragt die Überwurfschraube 4 mit ihrem Betätigungsabschnitt 34 durch die Durchgangsöffnung 37a der Halteplatte 37 hindurch, und diese liegt auf einer endseitigen Stirnfläche 36 des Anschlusskörpers 2a auf. Hierbei ist es erfindungsgemäß zweckmäßig, wenn in dem Überlappungsbereich der Halteplatte 37 in Bezug auf die Überwurfschraube 4 in der Überwurfschraube 4 eine ringförmige Ausnehmung 36a ausgebildet ist, so dass die Halteplatte 37 nicht auf der Überwurfschraube 4 aufliegt. Die Halteplatte 37 kann in bekannter Weise, beispielsweise durch Schraubverbindungen, an dem Anschlusskörper 2a befestigt werden. Die Überwurfschraube 4 liegt bei Druckbeaufschlagung mit ihrem die Seitenwand 24 aufweisenden Dichtungsabschnitt 8 an der Halteplatte 37 an.

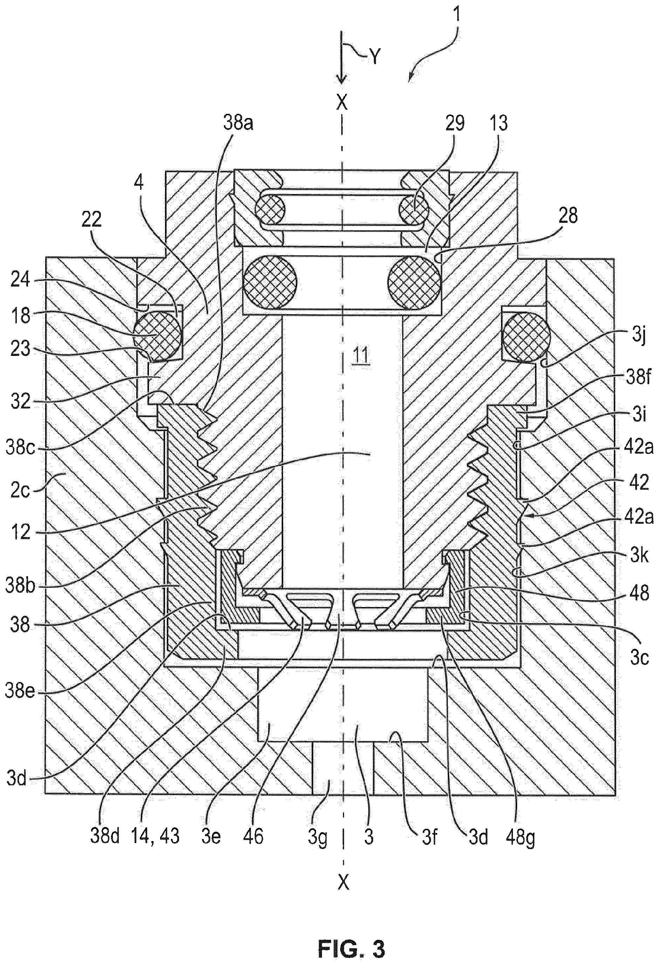

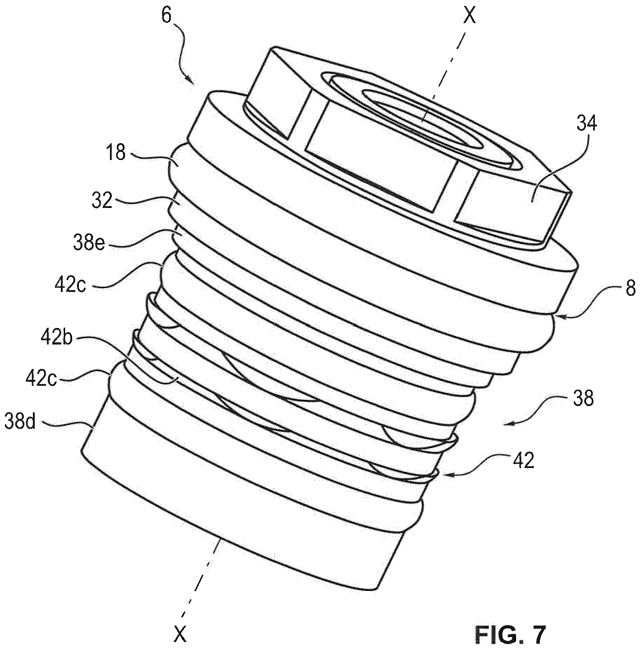

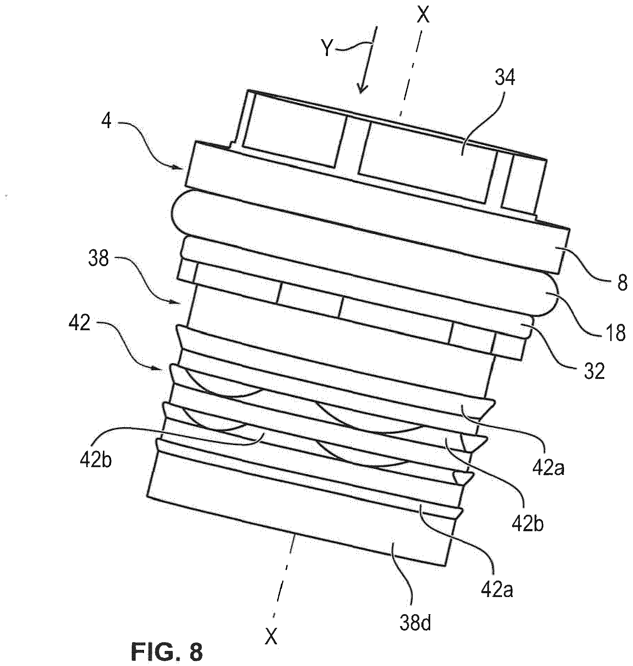

In Figur 3 ist eine weitere Ausbildung einer erfindungsgemäßen Anschlussvorrichtung 1 dargestellt. Diese Ausbildung einer erfindungsgemäßen Anschlussvorrichtung ermöglicht die Verwendung der erfindungsgemäßen Überwurfschraube 4 auch bei einem Anschlusskörper 2c, der keine übliche Formbohrung aufweist und somit auch keinen Innengewindeabschnitt, der mit dem Außengewindeabschnitt 7 der Überwurfschraube 4 korrespondiert. Bei dieser erfindungsgemäßen Ausführungsform umfasst eine erfindungsgemäße Anschlussvorrichtung 1 einen Einpressadapter 38. Dieser Einpressadapter 38 ist insbesondere zylinderförmig ausgebildet und besitzt eine Durchgangsöffnung 38a, siehe Fig. 7 und 8. Diese Durchgangsöffnung 38a weist in ihrer Innenwandung im in Einschraubrichtung Y gesehen hinteren Bereich einen Innengewindeabschnitt 38b auf, der in seiner Länge und seinen Abmessungen an den Außengewindeabschnitt 7 des Schraubenschaftes 6 der Überwurfschraube 4 derart angepasst ist, dass die Überwurfschraube 4 mit ihrem Außengewindeabschnitt 7 vollständig in diesen Innengewindeabschnitt 38b des Einpressadapters 38 eingeschraubt werden kann. Im eingeschraubten Zustand des Außengewindeabschnitts 7 in den Einpressadapter 38 liegt der Einpressadapter 38 mit seiner dem Dichtungsabschnitt 8 zugekehrten Stirnfläche 38c am Stirnbund 32 an. An seinem dem Innengewindeabschnitt 38b gegenüberliegenden Ende weist der Einpressadapter 38 einen radial nach innen gerichteten Ringbund 38d auf. Hierbei ist der Abstand zwischen dem Ende des Innengewindeabschnitts 38b des Einpressadapters 38 und dem Ringbund 38d derart gewählt, dass ein erfindungsgemäßes Halteelement 14 aufgenommen und gelagert werden kann. Der Innendurchmesser eines sich an den Innengewindeabschnitt 38b des Einpressadapters 38 anschließenden zylinderförmigen Bereiches 38e entspricht zweckmäßigerweise dem Innendurchmesser des Innengewindeabschnittes 38b des Einpressadapters 38.

An seinem Außenumfang weist der erfindungsgemäße Einpressadapter 38, siehe Fig. 3, 4, 5, 6, 7, 8, zweckmäßigerweise eine Verzahnung 42 auf. Erfindungsgemäß ist es vorteilhaft, wenn zwischen dem Einpressadapter 38 und dem gegenüberliegenden Abschnitt einer Formbohrung 3i des Anschlusskörpers 2c eine Übermaßpassung vorhanden ist, so dass das Größtmaß des Innendurchmessers des zugehörigen Formbohrungsabschnitts kleiner ist als das Kleinstmaß des Außendurchmessers des Einpressadapters 38. Vorteilhafterweise umfasst die Verzahnung 42 mindestens ein auf einem Umkreis des Einpressadapters 38 angeordnetes ringförmiges Zahnsegment 42a, hierbei kann es sich um ein ringförmig geschlossenes Zahnsegment 42a handeln, oder um einzelne umfangsgemäß ausgebildete Zahnsegmente 42b. Zweckmäßigerweise sind mehrere axial beabstandete, ringförmig angeordnete oder ausgebildete Zahnsegmente 42a oder 42b vorhanden, deren radiale Höhe in Einschraubrichtung Y bzw. in Einpressrichtung des Einpressadapters 38 gleich ist oder abnimmt. Das in Einschraubrichtung Y vordere Zahnsegment 42a bzw. 42b weitet jeweils für das nachfolgende Zahnsegment die Formbohrung 3i auf, wodurch sich der Einpressadapter 38 leichter einpressen lässt. Ferner kann sich mit steigendem Durchmesser der Reibschluss zwischen den Zahnsegmenten 42a bzw. 42b und dem Anschlusskörper 2c erhöhen. Der Anschlusskörper 2c weist eine Formbohrung 3i auf, die sich aus mindestens zwei axial hintereinander liegenden Formbohrungsabschnitten 3j und 3k zusammensetzt. Hierbei ist der in Einschraubrichtung Y hintere Formbohrungsabschnitt 3j, was seinen Durchmesser und seine Höhe betrifft, dem Dichtungsabschnitt 8 der erfindungsgemäßen Überwurfschraube 4 angepasst, und der in Einschraubrichtung Y vordere Bohrungsabschnitt 3k besitzt einen geringeren Durchmesser als der Bohrungsabschnitt 3j, und der Außendurchmesser des Einpressadapters 38 ist auf den Innendurchmesser des Bohrungsabschnitts 3k, wie zuvor beschrieben, abgestimmt, so dass die erforderliche Presspassung erreicht wird. Der Einpressadapter 38 weist an seinem in Einschraubrichtung Y hinteren Ende einen radial nach außen abstehenden Ringbund 38f auf, dessen Außendurchmesser an den Außendurchmesser des Stirnbundes 32 der Überwurfschraube 4 angepasst ist. Die erfindungsgemäß vorgesehene vorteilhafte Bemessung der Formbohrungsabschnitte 3j und 3k und die entsprechende angepasste Dimensionierung des erfindungsgemäßen Einpressadapters 38 verhindert, dass beim Einpressen des Einpressadapters 38 der Formbohrungsabschnitt 3j an seiner Innenwand beschädigt wird. Durch die Verwendung eines erfindungsgemäßen Einpressadapters 38 kann eine erfindungsgemäße Überwurfschraube 4 an unterschiedliche Abmessungen der Formbohrung 3i angepasst werden, und es können unterschiedliche Rohrgrößen ohne Veränderung der vorhandenen Formbohrungsgröße angeschlossen werden. Die Ausbildung des Halteelements 14 entspricht der Ausführungsform gemäß Fig. 1 und 2.

Bei einem erfindungsgemäßen Einpressadapter 38 kann es weiterhin zweckmäßig sein, wenn beidseitig der Verzahnung ringförmig geschlossene Ringwulste 42c ausgebildet sind, siehe Fig. 7, 8. Durch diese Ringwulste 42c wird der Zahnsegmentbereich in axialer Richtung abgeschlossen, so dass Werkstoffabtragungen oder dergleichen, die sich im Zahnsegmentbereich befinden, nicht nach außen dringen können. Eine derartige Wirkung kann auch bei ringförmig geschlossenen Zahnsegmenten 42a erreicht werden.

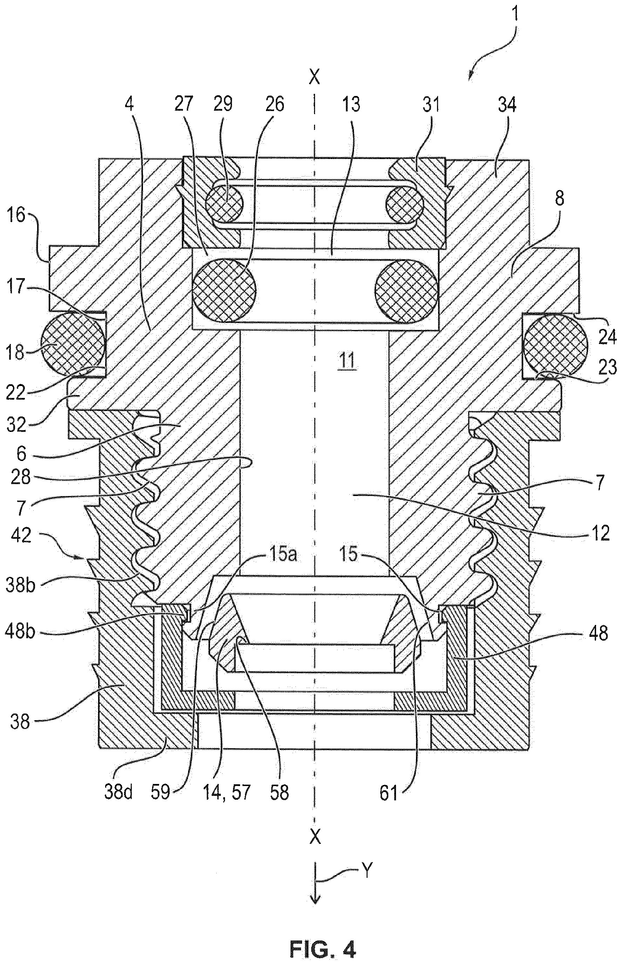

Eine alternative Ausführungsform eines Halteelementes 14 ist in Figur 4 dargestellt. Hierbei wird ein Klemmring 57 innerhalb des Fixierelementes 48 gehalten. Dieser Klemmring 57 besitzt einen axial verlaufenden Längsschlitz, so dass er radial geweitet oder verengt werden kann in Bezug auf seinen Innen- und Außendurchmesser. An seiner Innenwandung 57a weist der Klemmring 57 vorteilhafterweise einen umfangsgemäßen Schneidzahn 57b auf, wobei der Innendurchmesser im unverformten Zustand des Klemmrings 57 im Bereich des Schneidzahns 57b kleiner ist als der Außendurchmesser der einzusteckenden Rohrleitung. Der Schneidzahn 57b besitzt eine in Einschraubrichtung Y ansteigende Zahnflanke 57c und eine radial verlaufende Zahnflanke 57d, die in Einschraubrichtung Y der Zahnflanke 57c vorgelagert ist und mit dieser eine Zahnschneidkante 58 bildet. An seinem Außenumfang weist der Klemmring 57 an seinem der Überwurfschraube 4 zugekehrten Ende eine ansteigende Konusfläche 59 auf. Innerhalb der Überwurfschraube 4 ist in Einschraubrichtung Y am vorderen Ende innerhalb der Durchgangsöffnung 11 ein sich zum Ende des Schraubenschaftes 6 konisch erweiternder Bohrungsabschnitt 60, Gegenkonusfläche 61, ausgebildet, der mit der Konusfläche 59 des Klemmrings 57 derart zusammenwirkt, dass bei einer Anlage der Konusfläche 59 mit der ansteigenden Zahnflanke 57c der Klemmring 57 radial zusammengedrückt wird. Bei einem Einstecken der anzuschließenden Rohrleitung wird der Klemmring 57 radial gespreizt, und bei einer Zugbelastung entgegen der Einschraubrichtung Y wird der Klemmring 57 radial zusammengedrückt, und die Zahnschneidkante 58 kann sich in die Rohrleitung eingraben, so dass die Rohrleitung fixiert wird.

Im Übrigen wird der Klemmring 57, wie bereits zu Figur 1. 2 und 3 beschrieben, mittels des Fixierelementes 48 und dessen Ringkragen 48g gehalten.

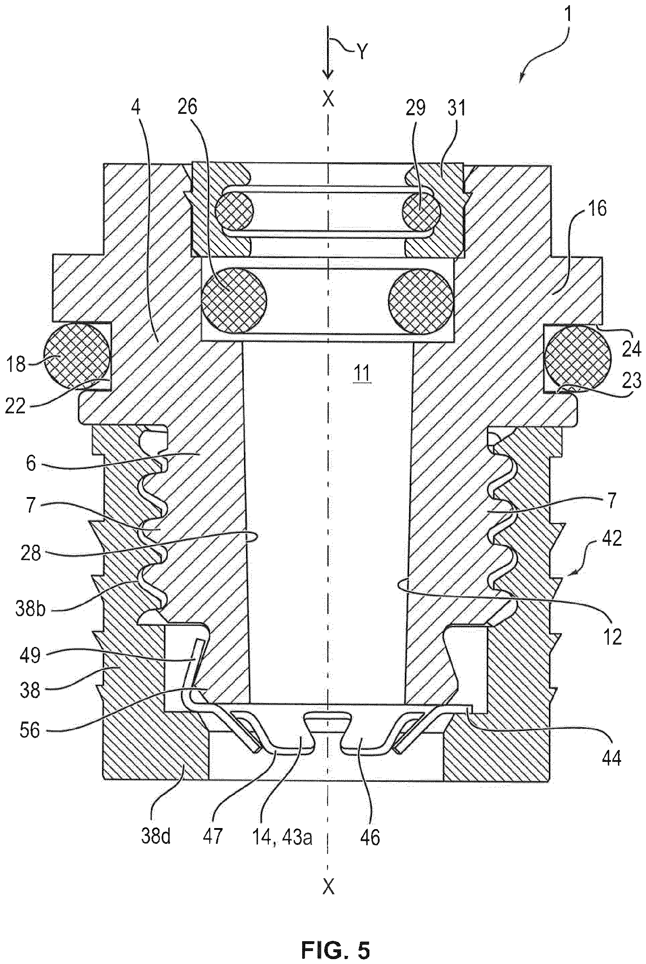

Erfindungsgemäß kann es zweckmäßig sein, siehe Fig. 5, wenn eine Zahnscheibe 43a unmittelbar an dem in Einschraubrichtung Y vorderen Ende des Außengewindeabschnitts 7 befestigt ist. Hierzu ist es zweckmäßig, wenn - wie in Fig. 5 dargestellt ist - an dem Ringkragen 44 der Zahnscheibe 43a an seinem Umfang mehrere Zungen 62 angeformt sind. Diese Zungen 62 werden zum Befestigen entgegen der Einschraubrichtung Y umgebogen, so dass sie eine Umfangsfläche am vorderen Ende des Schraubenschaftes 6 umfassen und an dieser anliegen. Die Umfangsfläche wird von einem im Längsschnitt kegelstumpfförmigen Abschnitt 63 gebildet, wobei die große Kegelstumpfstirnfläche am Ende des Schraubenschaftes 6 liegt und ihre im Durchmesser kleinere Kegelstumpfendfläche am Ende des Außengewindeabschnitts 7 liegt. Der Außendurchmesser der kleineren Kegelstumpfendfläche ist kleiner als der Außendurchmesser des Ringkragens 44. Im Übrigen kann die Zahnscheibe 43a wie die Zahnscheibe 43 ausgebildet sein, wie zu den Fig. 1, 2 und 3 beschrieben. Im Übrigen kann die Anschlussvorrichtung, wie zu den Fig. 1, 2 und 3 beschrieben, ausgebildet sein

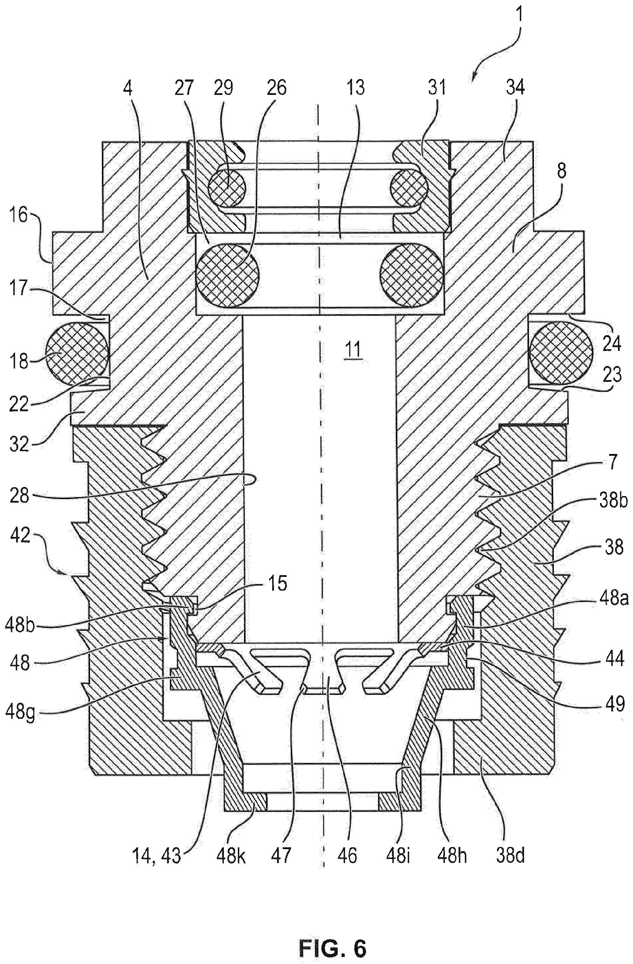

Da bei einer Formbohrung 3i, wie sie im Anschlusskörper 2c dargestellt ist, in der Regel kein Tiefenanschlag in der Formbohrung ausgebildet ist, kann es erfindungsgemäß von Vorteil sein, wenn das Fixierelement 48 für den Zahnring oder den Klemmring 57 derart ausgebildet ist, dass auch an diesem Fixierelement 48 ein Tiefenanschlag ausgebildet ist. Eine zweckmäßige Ausbildung hierzu ist in Figur 6 gezeigt. An dem nach innen gerichteten Ringkragen 48g des Fixierelementes 48 ist ein im Querschnitt kegelstumpfförmiger Verlängerungsabschnitt 48h ausgebildet, der sich in Einschraubrichtung Y erstreckt und an dessen Ende ein Ringflansch 48i mit einem radial nach innen gerichteten Ringbund 48k angeformt ist, wobei der Innendurchmesser des Ringflansches 48i dem Außendurchmesser des anzuschließenden Rohres angepasst ist und dem Innendurchmesser des Führungsabschnittes 12 der Durchgangsöffnung 11 entsprechen kann. Der Ringbund 48k bildet dann den Tiefenanschlag für die einzusteckende Rohrleitung. Der Innendurchmesser des Ringbundes 48k ist an den Innendurchmesser der anzuschließenden Rohrleitung angepasst.

Da durch die Anformung des Verlängerungsteils insgesamt die Steifigkeit des Fixierelementes 48 vergrößert wird, ist es vorteilhaft, wenn die Ringwand 48a des Fixierelementes 48 durch eine umlaufende Ringnut 49 geschwächt wird, so dass hierdurch eine größere radiale Elastizität der Ringwand 48a erreicht wird. Im Übrigen kann die Anschlussvorrichtung wie zu den Fig. 1, 2 und 3 beschrieben ausgebildet sein.

Eine erfindungsgemäße Überwurfschraube 4 und/oder ein erfindungsgemäßer Anschlusskörper 2, 2a, 2c können zweckmäßigerweise aus Kunststoff oder Metall gefertigt sein. Ein erfindungsgemäßer Einpressadapter 38 kann insbesondere aus Metall, beispielsweise Aluminium oder Stahl, hergestellt sein.

### Bezugszeichen

- 1: Anschlussvorrichtung
- 2: Anschlusskörper
- 2a: Anschlusskörper
- 2c: Anschlusskörper
- 3: Formbohrung
- 3a: Innengewindeabschnitt
- 3b: Zylindrischer Dichtabschnitt
- 3c: Zylindrischer Aufnahmeabschnitt
- 3d: Stufenfläche
- 3e: Bohrungsabschnitt
- 3f: Anschlagfläche
- 3g: Bohrungsabschnitt
- 3h: zylinderförmiger Bohrungsabschnitt
- 3i: Formbohrung
- 3j: hinterer Formbohrungsabschnitt
- 3k: vorderer Formbohrungsabschnitt
- 4: Überwurfschraube
- 6: Schraubenschaft
- 7: Außengewindeabschnitt
- 8: Dichtungsabschnitt
- 9: Dichtungsfläche
- 11: Durchgangsöffnung
- 12: Führungsabschnitt
- 13: Dichtabschnitt
- 14: Halteelement
- 15: Rastnut
- 15a: Fixierabschnitt
- 15b: Aufweitungsschräge
- 16: Umfangsfläche
- 17: Umfangsnut
- 18: Dichtelement
- 22: Nutgrund
- 23: Vordere Seitenwand
- 24: Hintere Seitenwand
- 26: Dichtung
- 27: Innere Ringnut
- 28: Innenwandung
- 29: Dichtung
- 29a: Ringnut
- 31: Ringnutkörper
- 32: Stirnbund
- 33: Auflagestufe
- 34: Betätigungsabschnitt
- 36: Stirnfläche
- 36a: Ausnehmung
- 37: Halteplatte
- 37a: Durchgangsöffnung
- 38: Einpressadapter
- 38a: Durchgangsöffnung
- 38b: Innengewindeabschnitt
- 38c: Stirnfläche
- 38d: Ringbund
- 38e: zylinderförmiger Bereich
- 38f: Ringbund
- 42: Verzahnung
- 42a: Zahnsegment (ringförmig)
- 42b: Zahnsegment
- 42c: Ringwulst
- 43: Zahnscheibe
- 43a: Zahnscheibe
- 44: Ringkragen
- 46: Haltezähne
- 47: Zahnkanten
- 48: Fixierelement
- 48a: Ringwand
- 48b: Rastansatz
- 48c: Einführungsschräge
- 48g: Ringkragen
- 48h: Verlängerungsabschnitt
- 48i: Ringflansch
- 48k: Ringbund
- 49: Ringnut
- 57: Klemmring
- 57a: Innenwandung
- 57b: Schneidzahn
- 57c: Zahnflanken
- 57d: Zahnflanken
- 58: Zahnschneidkante
- 59: Konusfläche
- 60: Bohrungsabschnitt/Gegenkonusfläche
- 61: Gegenkonusfläche
- 62: Zungen
- 63: Kegelstumpfförmiger Abschnitt

- Y: Einschraubrichtung

## Patentansprüche

1. Überwurfschraube (4) zur Verwendung bei einer Anschlussvorrichtung (1) zum lösbaren Anschluss von Kunststoff-Rohrleitungen, mit einem Schraubenschaft (6), an dessen in Einschraubrichtung (Y) vorderen Bereich ein Außengewindeabschnitt (7) ausgebildet ist und hieran sich entgegen der Einschraubrichtung (Y) ein Dichtungsabschnitt (8) mit einer Umfangsdichtung anschließt, und wobei eine innere Durchgangsöffnung (11) vorhanden ist, die einen in Einschraubrichtung (Y) gesehen vorderen Führungsabschnitt (12) aufweist sowie einen in Einschraubrichtung (Y) hinter diesen sich anschließenden Dichtabschnitt (13) und mit einem am in Einschraubrichtung (Y) vorderen Ende der Durchgangsöffnung (11) angeordneten Halteelement (14) für die anzuschließende Rohrleitung, wobei der Dichtungsabschnitt (8) einen größeren Außendurchmesser besitzt als der Außengewindeabschnitt (7) und in seiner Umfangsfläche (16) in einer Umfangsnut (17) ein ringförmiges Dichtelement (18) als Umfangsdichtung (9) angeordnet ist, dessen Außendurchmesser größer als der Außendurchmesser der Umfangsnut (17) ist.

2. Überwurfschraube (4) nach Anspruch 1,
**dadurch gekennzeichnet, dass** die Umfangsnut (17) aus einem Nutgrund (22) und einander gegenüberliegenden, im Nutgrund (22) endenden Seitenwänden (23, 24) besteht, wobei die in Einschraubrichtung (Y) vordere Seitenwand (23) eine geringere Wandhöhe besitzt als die gegenüberliegende, in Einschraubrichtung (Y) hintere Seitenwand (24), so dass der Dichtungsabschnitt (8) zwei Abschnitte mit unterschiedlichen Außendurchmessern im Anschluss an die jeweiligen Seitenwände (23, 24) aufweist.

3. Überwurfschraube (4) nach Anspruch 2,
**dadurch gekennzeichnet, dass** die Seitenwandhöhe der in Einschraubrichtung (Y) vorderen Seitenwand (23) mindestens 50 % eines Schnurdurchmessers des ringförmigen Dichtelementes (18) beträgt.

4. Überwurfschraube (4) nach Anspruch 2 oder 3,
**dadurch gekennzeichnet, dass** die vordere Seitenwand (23) Bestandteil eines einen Anschlag bildenden Stirnbundes (32) ist.

5. Überwurfschraube (4) nach einem der Ansprüche 1 bis 4,
**dadurch gekennzeichnet, dass** das ringförmige Dichtelement (18) aus einer O-Ring-Dichtung besteht.

6. Überwurfschraube (4) nach einem der Ansprüche 1 bis 5,
**dadurch gekennzeichnet, dass** in Einschraubrichtung (Y) hinter dem Dichtungsabschnitt (8) sich ein Betätigungsabschnitt (34) anschließt.

7. Überwurfschraube (4) nach einem der Ansprüche 1 bis 6,
**dadurch gekennzeichnet, dass** der Dichtabschnitt (13) mindestens eine in einer inneren Ringnut (27) seiner Innenwandung (28) angeordnete Dichtung (26) aufweist.

8. Überwurfschraube (4) nach Anspruch 7,
**dadurch gekennzeichnet, dass** zwei hintereinander angeordnete O-RingDichtungen (26, 29) ausgebildet sind.

9. Überwurfschraube (4) nach einem der Ansprüche 1 bis 8,
**dadurch gekennzeichnet, dass** das Halteelement (14) innerhalb eines am in Einschraubrichtung (Y) vorderen Ende des Schraubenschaftes (6) rastend befestigten Fixierelementes (48) befestigt ist und insbesondere das Fixierelement (48) einen Tiefenanschlag für die anzuschließende Rohrleitung aufweist.

10. Anschlussvorrichtung (1) zum lösbaren Anschluss von Kunststoff-Rohrleitungen, umfassend eine Überwurfschraube (4),
**gekennzeichnet durch** die Merkmale nach einem der Ansprüche 1 bis 9.

11. Anschlussvorrichtung (1) nach Anspruch 10,
**dadurch gekennzeichnet, dass** das Halteelement (14) aus einer Zahnscheibe (43) besteht mit einem äußeren Ringkragen (44), an dessen inneren Öffnungsrand radial und schräg in Einschraubrichtung (Y) verlaufende Haltezähne (46) ausgebildet sind, deren vordere Zahnkanten (47) auf einem Umfangskreis liegen, dessen Durchmesser kleiner/gleich dem Durchmesser der anzuschließenden Rohrleitung ist.

12. Anschlussvorrichtung (1) nach Anspruch 11,
**dadurch gekennzeichnet, dass** die Zahnscheibe (43) unmittelbar am vorderen Ende des Schraubenschaftes (6) befestigt ist.

13. Anschlussvorrichtung (1) nach Anspruch 10,
**dadurch gekennzeichnet, dass** das Halteelement (14) aus einem Klemmring (57) mit mindestens einer inneren Zahnschneidkante (58) ausgebildet ist.

14. Anschlussvorrichtung (1) nach Anspruch 13,
**dadurch gekennzeichnet, dass** der Klemmring (57) an seinem äußeren Umfang an seinem dem Schraubenschaft (6) zugekehrten Ende eine in Einschraubrichtung (Y) ansteigende Konusfläche (59) aufweist, die mit einer im in Einschraubrichtung (Y) vorderen Ende der Durchgangsöffnung (11) ausgebildeten Gegenkonusfläche (61) zusammenwirkt.

15. Anschlussvorrichtung (1) nach einem der Ansprüche 10 bis 14,
**dadurch gekennzeichnet, dass** auf dem Schraubenschaft (6) ein Einpressadapter (38) insbesondere bis zur Anlage an den Stirnbund (32) aufschraubbar ist, an dessen Außenumfang eine Verzahnung (42) ausgebildet ist.

16. Anschlussvorrichtung (1) nach Anspruch 15,
**dadurch gekennzeichnet, dass** die Verzahnung (42) aus mindestens einem ringförmig geschlossenen Zahnsegment (42a) oder aus auf mindestens einem Umfangskreis liegenden, zueinander beabstandeten Zahnsegmenten (42b) besteht.

17. Anschlussvorrichtung (1) nach Anspruch 16,
**dadurch gekennzeichnet, dass** beidseitig der auf dem Umkreis angeordneten einzelnen Zahnsegmente (42b) jeweils ein ringförmig geschlossenes Zahnsegment (42) oder eine Ringwulst (42c) ausgebildet ist.

18. Anschlussvorrichtung (1) nach Anspruch 16 oder 17,
**dadurch gekennzeichnet, dass** die Höhe der Zahnsegmente (42a, 42b) in Einschraubrichtung abnimmt und/oder die Zahnsegmente (42a, 42b) auf Umfangskreisen mit unterschiedlichem Kreisdurchmesser liegen, wobei der Kreisdurchmesser in Einschraubrichtung (Y) derart abnimmt, dass das jeweils in Einschraubrichtung (Y) vordere Zahnsegment (42a, 42b) auf einem Umfangskreis mit einem kleineren Durchmesser liegt als das in Einschraubrichtung (Y) hinterste bzw. hintere Zahnsegment (42a, 42b).

19. Anschlussvorrichtung (1) nach einem der Ansprüche 15 bis 18,
**dadurch gekennzeichnet, dass** der Einpressadapter (38) an seinem in Einschraubrichtung (Y) vorderen Ende im Anschluss an seinen Innengewindeabschnitt (38b) einen Ringbund (38d) aufweist, so dass das Fixierelement (48) für das Halteelement (14), insbesondere für die Zahnscheibe (43) oder den Klemmring (57) aufgenommen wird.

20. Anschlussvorrichtung (1) nach einem der Ansprüche 10 bis 14,
**gekennzeichnet durch** einen Anschlusskörper (2) mit einer Formbohrung (3) mit einem Innengewindeabschnitt (3a), in den der Außengewindeabschnitt (7) einschraubbar ist und einem dem Innengewindeabschnitt (3a) in Einschraubrichtung (Y) nachgelagerten Dichtabschnitt (3b) zur Aufnahme des Dichtungsabschnitts (8).

21. Anschlussvorrichtung (1) nach einem der Ansprüche 10 bis 14,
**gekennzeichnet durch** einen Anschlusskörper (2a) mit einer Formbohrung (3), bestehend aus mindestens einem in Einschraubrichtung (Y) hinteren Dichtabschnitt (3b) zur Aufnahme des Dichtungsabschnittes (8) und einen sich daran in Einschraubrichtung (Y) anschließenden zylindrischen Bohrungsabschnitt (3h), dessen Innendurchmesser größer/gleich dem Außendurchmesser des Außengewindeabschnitts (7) ist, sowie mit einer auf dem Anschlusskörper (2a) befestigbaren Halteplatte (37) für die Überwurfschraube (4).

22. Anschlussvorrichtung (1) nach einem der Ansprüche 15 bis 19,
**gekennzeichnet durch** einen Anschlusskörper (2c) mit einer Formbohrung (3i), bestehend aus einem in Einschraubrichtung (Y) hinteren Dichtabschnitt (3j) zur Aufnahme des Dichtungsabschnittes (8) und mit einem sich daran anschließenden Formbohrungsabschnitt (3i) zur Aufnahme des Einpressadapters (38).

## Claims

1. Retaining screw (4) for use in a connector apparatus (1) for the releasable connection of plastic pipelines, having a screw shank (6), on the front (in the screw-in direction (Y)) region of which an external thread section (7) is configured which is adjoined, counter to the screw-in direction (Y), by a seal section (8) with a circumferential seal, and there being an inner through opening (11) which has a front (as viewed in the screw-in direction (Y)) guide section (12) and a sealing section (13) which adjoins the said guide section (12) in the screw-in direction (Y), and with a holding element (14) for the pipeline to be connected, which holding element (14) is arranged at the front (in the screw-in direction (Y)) end of the through opening (11), the seal section (8) having a greater external diameter than the external thread section (7), and an annular sealing element (18) being arranged as circumferential seal (9) in a circumferential groove (17) in the circumferential face (16) of the said seal section (8), the external diameter of which annular sealing element (18) is greater than the external diameter of the circumferential groove (17) .

2. Retaining screw (4) according to Claim 1, **characterized in that** the circumferential groove (17) consists of a groove bottom (22) and side walls (23, 24) which lie opposite one another and end in the groove bottom (22), the front (in the screw-in direction (Y)) side wall (23) having a smaller wall height than the opposite, rear (in the screw-in direction (Y)) side wall (24), with the result that the seal section (8) has two sections with different external diameters in an adjoining manner with respect to the respective side walls (23, 24).

3. Retaining screw (4) according to Claim 2, **characterized in that** the side wall height of the front (in the screw-in direction (Y)) side wall (23) is at least 50% of a cord diameter of the annular sealing element (18).

4. Retaining screw (4) according to Claim 2 or 3, **characterized in that** the front side wall (23) is a constituent part of a front collar (32) which forms a stop.

5. Retaining screw (4) according to one of Claims 1 to 4, **characterized in that** the annular sealing element (18) consists of an O-ring seal.

6. Retaining screw (4) according to one of Claims 1 to 5, **characterized in that** an actuating section (34) adjoins behind the seal section (8) in the screw-in direction (Y).

7. Retaining screw (4) according to one of Claims 1 to 6, **characterized in that** the sealing section (13) has at least one seal (26) which is arranged in an inner annular groove (27) of its inner wall (28).

8. Retaining screw (4) according to Claim 7, **characterized in that** two O-ring seals (26, 29) which are arranged behind one another are configured.

9. Retaining screw (4) according to one of Claims 1 to 8, **characterized in that** the holding element (14) is fastened within a fixing element (48) which is fastened in a latching manner to the front (in the screw-in direction (Y)) end of the screw shank (6), and, in particular, the fixing element (48) has a depth stop for the pipeline to be connected.

10. Connector apparatus (1) for the releasable connection of plastic pipelines, comprising a retaining screw (4), **characterized by** the features according to one of Claims 1 to 9.

11. Connector apparatus (1) according to Claim 10, **characterized in that** the holding element (14) consists of a lock washer (43) with an outer annular collar (44), on the inner opening edge of which holding teeth (46) are configured which run radially and obliquely in the screw-in direction (Y) and the front tooth edges (47) of which lie on a circumferential circle, the diameter of which is less than or equal to the diameter of the pipeline to be connected.

12. Connector apparatus (1) according to Claim 11, **characterized in that** the lock washer (43) is fastened directly to the front end of the screw shank (6).

13. Connector apparatus (1) according to Claim 10, **characterized in that** the holding element (14) is configured from a clamping ring (57) with at least one inner tooth cutting edge (58).

14. Connector apparatus (1) according to Claim 13, **characterized in that**, on its outer circumference at its end which faces the screw shank (6), the clamping ring (57) has a cone face (59) which rises in the screw-in direction (Y) and interacts with a complementary cone face (61) which is configured in the front (in the screw-in direction (Y)) end of the through opening (11).

15. Connector apparatus (1) according to one of Claims 10 to 14, **characterized in that** a press-in adapter (38) on the screw shank (6) can be screwed on, in particular until it is in contact with the front collar (32), on the external circumference of which a toothing system (42) is configured.

16. Connector apparatus (1) according to Claim 15, **characterized in that** the toothing system (42) consists of at least one annularly closed tooth segment (42a) or of tooth segments (42b) which lie on at least one circumferential circle and are spaced apart from one another.

17. Connector apparatus (1) according to Claim 16, **characterized in that** in each case one annularly closed tooth segment (42) or one annular bead (42c) is configured on both sides of the individual tooth segments (42b) which are arranged on the circumcircle.

18. Connector apparatus (1) according to Claim 16 or 17, **characterized in that** the height of the tooth segments (42a, 42b) decreases in the screw-in direction, and/or the tooth segments (42a, 42b) lie on circumferential circles with a different diameter, the diameter decreasing in the screw-in direction (Y) in such a way that the respective front (in the screw-in direction (Y)) tooth segment (42a, 42b) lies on a circumferential circle with a smaller diameter than the rearmost or rear (in the screw-in direction (Y)) tooth segment (42a, 42b).

19. Connector apparatus (1) according to one of Claims 15 to 18, **characterized in that**, at its front (in the screw-in direction (Y)) end, the press-in adapter (38) has an annular collar (38d) adjacently with respect to its internal thread section (38b), with the result that the fixing element (48) for the holding element (14), in particular for the lock washer (43) or the clamping ring (57), is received.

20. Connector apparatus (1) according to one of Claims 10 to 14, **characterized by** a connector body (2) with a profiled bore (3) with an internal thread section (3a), into which the external thread section (7) can be screwed, and a sealing section (3b) for receiving the seal section (8), which sealing section (3b) is positioned downstream of the internal thread section (3a) in the screw-in direction (Y).

21. Connector apparatus (1) according to one of Claims 10 to 14, **characterized by** a connector body (2a) with a profiled bore (3), consisting of at least one rear (in the screw-in direction (Y)) sealing section (3b) for receiving the seal section (8), and a cylindrical bore section (3h) which adjoins it in the screw-in direction (Y) and the internal diameter of which is greater than or equal to the external diameter of the external thread section (7), and with a holding plate (37) for the retaining screw (4), which holding plate (37) can be fastened on the connector body (2a).

22. Connector apparatus (1) according to one of Claims 15 to 19, **characterized by** a connector body (2c) with a profiled bore (3i), consisting of a rear (in the screw-in direction (Y)) sealing section (3j) for receiving the seal section (8), and with a profiled bore section (3i) which adjoins it for receiving the press-in adapter (38).

## Revendications

1. Vis chapeau (4) destinée à être utilisée dans un dispositif de raccordement (1) servant au raccordement détachable de conduites tubulaires en matière synthétique, comprenant une tige de vis (6), au niveau de la région, située à l'avant dans le sens de vissage (Y), de laquelle est formée une partie filetée extérieure (7) à laquelle se raccorde, dans le sens opposé au sens de vissage (Y), une partie d'étanchéité (8) dotée d'un joint d'étanchéité périphérique, et dans laquelle une ouverture traversante intérieure (11) est prévue, laquelle comprend une partie de guidage (12) située à l'avant vue dans le sens de vissage (Y) ainsi qu'une partie d'étanchéité (13) se raccordant derrière celle-ci dans le sens de vissage (Y) et comprenant un élément de retenue (14), disposé à l'extrémité de l'ouverture traversante (11) située à l'avant dans le sens de vissage (Y), pour la conduite tubulaire à raccorder, dans laquelle la partie d'étanchéité (8) présente un diamètre extérieur plus grand que la partie filetée extérieure (7) et un élément d'étanchéité annulaire (18) est disposé en tant que joint d'étanchéité périphérique (9) dans une rainure périphérique (17) dans sa surface périphérique (16), joint d'étanchéité périphérique dont le diamètre extérieur est plus grand que le diamètre extérieur de la rainure périphérique (17).

2. Vis chapeau (4) selon la revendication 1, **caractérisée en ce que** la rainure périphérique (17) est constituée d'un fond de rainure (22) et de parois latérales (23, 24) en regard l'une de l'autre se terminant dans le fond de rainure (22), la paroi latérale (23) située à l'avant dans le sens de vissage (Y) présentant une hauteur de paroi plus petite que la paroi latérale (24) en regard située à l'arrière dans le sens de vissage (Y), de sorte que la partie d'étanchéité (8) comprend deux parties de diamètres extérieurs différents dans le prolongement des parois latérales (23, 24) respectives.

3. Vis chapeau (4) selon la revendication 2,
**caractérisée en ce que** la hauteur de la paroi latérale (23) située à l'avant dans le sens de vissage (Y) représente au moins 50 % d'un diamètre de cordon de l'élément d'étanchéité annulaire (18).

4. Vis chapeau (4) selon la revendication 2 ou 3, **caractérisée en ce que** la paroi latérale avant (23) fait partie d'un épaulement frontal (32) formant une butée.

5. Vis chapeau (4) selon l'une des revendications 1 à 4,
**caractérisée en ce que** l'élément d'étanchéité annulaire (18) est constitué d'un joint d'étanchéité torique.

6. Vis chapeau (4) selon l'une des revendications 1 à 5,
**caractérisée en ce qu'**une partie d'actionnement (34) se raccorde derrière la partie d'étanchéité (8) dans le sens de vissage (Y).

7. Vis chapeau (4) selon l'une des revendications 1 à 6,
**caractérisée en ce que** la partie d'étanchéité (13) comprend au moins un joint d'étanchéité (26) disposé dans une rainure annulaire intérieure (27) de sa paroi intérieure (28).

8. Vis chapeau (4) selon la revendication 7,
**caractérisée en ce que** deux joints d'étanchéité toriques (26, 29) disposés l'un derrière l'autre sont formés.

9. Vis chapeau (4) selon l'une des revendications 1 à 8,
**caractérisée en ce que** l'élément de retenue (14) est fixé à l'intérieur d'un élément de fixation (48) fixé par encliquetage à l'extrémité de la tige de vis (6) située à l'avant dans le sens de vissage (Y) et l'élément de fixation (48) comprend en particulier une butée de profondeur pour la conduite tubulaire à raccorder.

10. Dispositif de raccordement (1) pour le raccordement détachable de conduites tubulaires en matière synthétique, comportant une vis chapeau (4),
**caractérisé par** les caractéristiques selon l'une des revendications 1 à 9.

11. Dispositif de raccordement (1) selon la revendication 10,
**caractérisé en ce que** l'élément de retenue (14) est constitué d'une rondelle dentée (43) dotée d'une collerette annulaire extérieure (44), sur le bord d'ouverture intérieur de laquelle sont formées des dents de retenue (46) s'étendant radialement et de manière oblique dans le sens de vissage (Y), dents dont les bords avant (47) se situent sur un cercle périphérique dont le diamètre est inférieur ou égal au diamètre de la conduite tubulaire à raccorder.

12. Dispositif de raccordement (1) selon la revendication 11,
**caractérisé en ce que** la rondelle dentée (43) est fixée directement à l'extrémité avant de la tige de vis (6).

13. Dispositif de raccordement (1) selon la revendication 10,
**caractérisé en ce que** l'élément de retenue (14) est formé à partir d'une bague de serrage (57) dotée d'au moins une arête de coupe de dent (58) intérieure.

14. Dispositif de raccordement (1) selon la revendication 13,
**caractérisé en ce que** la bague de serrage (57) comprend, sur sa périphérie extérieure, à son extrémité tournée vers la tige de vis (6), une surface conique (59) montante dans le sens de vissage (Y), laquelle coopère avec une surface conique conjuguée (61) formée dans l'extrémité de l'ouverture traversante (11) située à l'avant dans le sens de vissage (Y).

15. Dispositif de raccordement (1) selon l'une des revendications 10 à 14,
**caractérisé en ce qu'**un adaptateur d'enfoncement (38) peut être vissé sur la tige de vis (6) en particulier jusqu'à venir en appui contre l'épaulement frontal (32), adaptateur sur la périphérie extérieure duquel une denture (42) est formée.

16. Dispositif de raccordement (1) selon la revendication 15,
**caractérisé en ce que** la denture (42) est formée à partir d'au moins un segment denté (42a) fermé de manière annulaire ou à partir de segments dentés (42b) espacés les uns des autres et situés sur au moins un cercle périphérique.

17. Dispositif de raccordement (1) selon la revendication 16,
**caractérisé en ce qu'**un segment denté (42) fermé de manière annulaire ou un bourrelet annulaire (42c) est formé respectivement des deux côtés des segments dentés (42b) individuels disposés sur le cercle périphérique.

18. Dispositif de raccordement (1) selon la revendication 16 ou 17,
**caractérisé en ce que** la hauteur des segments dentés (42a, 42b) diminue dans le sens de vissage et/ou les segments dentés (42a, 42b) sont situés sur des cercles périphériques de diamètres de cercle différents, le diamètre de cercle diminuant dans le sens de vissage (Y), de telle sorte que le segment denté (42a, 42b) situé respectivement à l'avant dans le sens de vissage (Y) se situe sur un cercle périphérique présentant un diamètre plus petit que le segment denté (42a, 42b) situé le plus à l'arrière ou situé à l'arrière dans le sens de vissage (Y) .

19. Dispositif de raccordement (1) selon l'une des revendications 15 à 18,
**caractérisé en ce que** l'adaptateur d'enfoncement (38) comprend une collerette annulaire (38d) à son extrémité située à l'avant dans le sens de vissage (Y) dans le prolongement de sa partie filetée intérieure (38b), de telle sorte que l'élément de fixation (48) pour l'élément de retenue (14), en particulier pour la rondelle dentée (43) ou la bague de serrage (57) soit reçu.

20. Dispositif de raccordement (1) selon l'une des revendications 10 à 14,
**caractérisé par** un corps de raccordement (2) comprenant un alésage moulé (3) doté d'une partie filetée intérieure (3a), dans laquelle la partie filetée extérieure (7) peut être vissée et une partie d'étanchéité (3b) placée en aval de la partie filetée intérieure (3a) dans le sens de vissage (Y) pour la réception de la partie d'étanchéité (8).

21. Dispositif de raccordement (1) selon l'une des revendications 10 à 14,
**caractérisé par** un corps de raccordement (2a) doté d'un alésage façonné (3), constitué d'au moins une partie d'étanchéité (3b) située à l'arrière dans le sens de vissage (Y) pour recevoir la partie d'étanchéité (8) et d'une partie d'alésage cylindrique (3h) s'y raccordant dans le sens de vissage (Y), partie d'alésage dont le diamètre intérieur est supérieur ou égal au diamètre extérieur de la partie filetée extérieure (7), et comprenant une plaque de retenue (37), pouvant être fixée sur le corps de raccordement (2a), pour la vis chapeau (4) .

22. Dispositif de raccordement (1) selon l'une des revendications 15 à 19,
**caractérisé par** un corps de raccordement (2c) doté d'un alésage façonné (3i), constitué d'une partie d'étanchéité (3j) située à l'arrière dans le sens de vissage (Y) pour recevoir la partie d'étanchéité (8) et d'une partie d'alésage façonné (3i) s'y raccordant pour la réception de l'adaptateur d'enfoncement (38).
